# EUROPÄISCHE PATENTSCHRIFT

(11) **EP 1 259 722 B1**
(45) Veröffentlichungstag und Bekanntmachung des Hinweises auf die Patenterteilung: **13.12.2006**
(21) Anmeldenummer: 01907485.5
(22) Anmeldetag: 01.02.2001
(51) Int. Cl.: F02F 3/00, B22D 15/02, B23P 15/10, F16L 1/00

(54) **VERFAHREN ZUR HERSTELLUNG VON KOLBEN FÜR EINE HUBKOLBENBRENNKRAFTMASCHINE**
METHOD FOR PRODUCTION OF A PISTON FOR A RECIPROCATING INTERNAL COMBUSTION ENGINE
PROCEDE DE FABRICATION DE PISTONS POUR MOTEUR ALTERNATIF A COMBUSTION INTERNE

(30) Priorität: 24.02.2000 DE 10008559
(43) Veröffentlichungstag der Anmeldung: 27.11.2002
(73) Patentinhaber: Volkswagen Aktiengesellschaft, 38436 Wolfsburg (DE)
(72) Erfinder: LIPPERT, Eduard, 38547 Calberlah (DE)
(86) Internationale Anmeldenummer: PCT/EP2001/001077
(87) Internationale Veröffentlichungsnummer: WO 2001/063112

(56) Entgegenhaltungen:
- GB-A- 2 191 964
- US-A- 4 847 964
- US-A- 5 605 126
- US-A- 5 983 856
- PATENT ABSTRACTS OF JAPAN vol. 1999, no. 03, 31. März 1999 (1999-03-31) & JP 10 317974 A (MITSUBISHI MOTORS CORP), 2. Dezember 1998 (1998-12-02)
- PATENT ABSTRACTS OF JAPAN vol. 018, no. 333 (P-1759), 23. Juni 1994 (1994-06-23) & JP 06 082342 A (ONO SOKKI CO LTD;OTHERS: 01), 22. März 1994 (1994-03-22)

## Beschreibung

Die Erfindung betrifft ein Verfahren zur Herstellung von Kolben für eine Hubkolbenbrennkrafifmaschine, insbesondere für einen Ottomotor mit Direkteinspritzung, insbesondere eines Kraftfahrzeuges, wobei jeder Kolben in einem Gießprozeß hergestellt wird, gemäß dem Oberbegriff des Anspruchs 1.

Bei der Herstellung von Hubkolbenbrennkraftmaschinen ergibt sich aufgrund von Streuungen bei im Gießverfahren hergestellten Kolben eine entsprechende Abweichung im gewünschten Hubvolumen und des Verdichtungsverhältnisses ε. Beispielsweise bei ε = 11 sind Toleranzen von 0,5 üblich. Bei Kolben mit glatter brennraumseitiger Fläche können Toleranzen aus dem Gießverfahren durch mechanische Nachbearbeitung ausgeglichen werden. Dies ist jedoch bei Kolben mit zerklüfteter Oberfläche, die beispielsweise Mulden und Erhöhungen zum entsprechenden Beeinflussen eines Einspritzvorganges in Ottomotoren mit Direkteinspritzung umfassen, nicht mehr möglich. Bei derartigen Kolben verbleibt ein wesentlicher Teil der brennraumseitigen Kolbenoberfläche als Gußfläche. Daher ist das von der brennraumseitigen Kolbenoberfläche gebildete Volumen und damit das Kompressionsvolumen im Zylinder mit großen Schwankungen entsprechend den großen Toleranzen im Gießprozeß behaftet. Dies beeinflußt jedoch die Motorfunktion ungünstig. So steigt ggf. eine Abgastemperatur, eine Emission von Schadstoffen und ein Kraftstoffverbrauch.

Der vorliegenden Erfindung liegt daher die Aufgabe zugrunde, ein Verfahren der obengenannten Art zur Verfügung zu stellen, wobei die obengenannten Nachteile überwunden werden und eine möglichst geringe Toleranz für Hubraum bzw. Verdichtungsverhältnis erzielt wird.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß wenigstens von einem ersten Kolben einer Charge eines Gießvorganges das von seiner brennraumseitigen Oberfläche gebildete Volumen V_{IST} bestimmt wird, daß dieses Volumen V_{IST} mit einem gewünschten Volumen V_{SOLL} verglichen wird und in Abhängigkeit von diesem Vergleich die Kompressionshöhe K_{H} derart abweichend von einem Sollwert festgelegt wird, daß danach bis auf Toleranzabweichungen ein vorgegebenes Kompressionsvolumen gewährleistet ist.

Dies hat den Vorteil, daß eine geringe Streuung bzgl. des Verdichtungsverhältnisses erzielt wird, da für jede Charge die Kolbenbolzenbohrung entsprechend an anderer Stelle am Kolben ausgebildet wird, so daß ggf. nach dem Gießprozeß aufgrund von Streuungen des von der Brennraumseite des Kolbens definierten Volumens des Kolbens resultierende Abweichungen mit der Kompressionshöhe ausgeglichen werden.

Zweckmäßigerweise wird nach dem Gießen für alle Kolben einer Charge die Kolbenbolzenbohrung im zuvor bestimmten Abstand K_{H} von der Kolbenoberfläche ausgebildet. Hierzu wird der Kolben beispielsweise mechanisch, beispielsweise mittels fräsen, bearbeitet.

In einer bevorzugten Ausführungsform wird das Volumen dadurch ermittelt, daß der Kolben mit seiner Brennraumseite in ein Flüssigkeitskissen getaucht, die Verdrängung gemessen und daraus das Volumen der Brennraumseite errechnet wird.

Die im Gießverfahren hergestellten Kolben weisen eine zerklüftete Oberfläche bzw. brennraumseitige Mulden und Erhöhungen auf. Ein wesentlicher Teil der brennraumseitigen Kolbenoberfläche ist daher nicht in geeigneter Weise mechanisch nachbearbeitbar, so daß diese Fläche als rohe Gußfläche verbleibt.

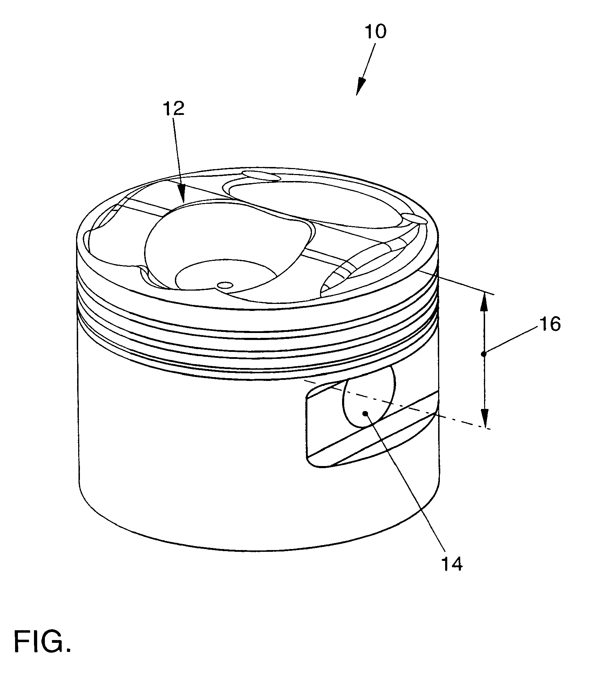

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. einen Kolben für eine Hübkolbenbrennkraftmaschine.

Der in der einzigen Fig. dargestellte Kolben 10 weist eine brerfnraumseitige Oberfläche 12 auf, welche ein entsprechendes Volumen definiert. Ferner weist der Kolben 10 eine Kolbenbolzenbohrung 14 auf, wobei der Abstand der Kolbenbolzenbohrung von der Kolbenoberfläche 12 als Kompressionshöhe K_{H} 16 bezeichnet wird. Erfindungsgemäß ist es vorgesehen, daß ein erster Kolben einer Charge von in einem Gießprozeß hergestellten Kolben derart vermessen wird, daß das von dessen Brennraumseite gebildete Volumen V_{IST} bestimmt wird. Aus der Abweichung dieses Volumens vom Sollwert V_{SOLL} ergibt sich eine entsprechende Abweichung des späteren Kompressionsvolumens des in einem Zylinder eingebauten Kolbens 10. Um diese Abweichung des von der Brennraumseite gebildeten Volumens zu kompensieren, wird die Kompressionshöhe K_{H} derart bestimmt, daß trotz des abweichenden Volumens der brennraumseitigen Kolbenoberfläche wieder möglichst genau das gewünschte Kompressionsvolumen und damit das gewünschte Kompressionsverhältnis erzielt wird. Im Anschluß an das Gießen wird dann mittels mechanischer Bearbeitung des Kolbens die Kolbenbolzenbohrung 14 an der entsprechenden Stelle am Kolben 10 ausgebildet.

Es wird erfindungsgemäß nach Vermessung des ersten Kolbens und Beginn der Fertigung dieser Charge mit dem eingestellten Wert für die Kompressionshöhe K_{H} fertigungsbegleitend jeder x-te Kolben entnommen und K_{H} überprüft und ggf. korrigiert.

## Patentansprüche

1. Verfahren zur Herstellung von Kolben für eine Hubkolbenbrennkraftmaschine, insbesondere für einen Ottomotor mit Direkteinspritzung, insbesondere eines Kraftfahrzeuges, wobei jeder Kolben in einem Gießprozeß hergestellt wird und in einem Zylinder ein Kompressionsvolumen definiert, **dadurch gekennzeichnet, daß** wenigstens von einem ersten Kolben einer Charge eines Gießvorganges das von seiner brennraumseitigen Oberfläche gebildete Volumen V_{IST} bestimmt wird, daß dieses Volumen V_{IST} mit einem gewünschten Volumen V_{SOLL} verglichen wird und in Abhängigkeit von diesem Vergleich die Kompressionshöhe K_{H} derart abweichend von einem Sollwert festgelegt wird, daß danach bis auf Toleranzabweichungen ein vorgegebenes Kompressionsvolumen gewährleistet ist.

2. Verfahren nach Anspruch 1, **dadurch gekennzeichnet, daß** nach dem Gießen für alle Kolben einer Charge die Kolbenbolzenbohrung im zuvor bestimmten Abstand K_{H} von der Kolbenoberfläche ausgebildet wird.

3. Verfahren nach Anspruch 2, **dadurch gekennzeichnet, daß** zum Ausbilden der Kolbenbolzenbohrung der Kolben mechanisch, beispielsweise mittels fräsen, bearbeitet wird.

4. Verfahren nach einem der vorhergehenden, **dadurch gekennzeichnet, daß** das Volumen **dadurch** ermittelt wird, daß der Kolben mit seiner Brennraumseite in ein Flüssigkeitskissen getaucht, die Verdrängung gemessen und daraus das Volumen der Brennraumseite errechnet wird.

5. Verfahren nach einem der vorhergehenden Ansprüche, **dadurch gekennzeichnet, daß** im Gießverfahren Kolben mit zerklüfteter Oberfläche bzw. mit brennraumseitigen Mulden und Erhöhungen hergestellt werden.

6. Verfahren nach einem der vorhergehenden Ansprüche, **dadurch gekennzeichnet, daß** ein wesentlicher Teil einer brennraumseitigen Kolbenoberfläche als rohe Gußfläche verbleibt.

## Claims

1. Method for the production of pistons for a reciprocating internal combustion engine, in particular for a spark-ignition engine with direct injection, in particular of a motor vehicle, each piston being produced in a casting process and defining in a cylinder a compression volume, **characterized in that** the volume V_{ACT} of at least a first piston of a batch in a casting operation which is formed by that surface of the first piston which is on the combustion-space side is determined, **in that** this volume V_{ACT} is compared with a desired volume V_{DES}, and, as a function of this comparison, the compression height K_{H} is fixed so as to deviate from a desired value in such a way that a predetermined compression volume is thereafter ensured, with the exception of tolerance deviations.

2. Method according to Claim 1, **characterized in that**, after casting, for all the pistons of a batch, the piston-pin bore is formed at the predetermined distance K_{H} from the piston surface.

3. Method according to Claim 2, **characterized in that**, to form the piston-pin bore, the piston is machined mechanically, for example by means of milling.

4. Method according to one of the preceding claims, **characterized in that** the volume is determined **in that** the piston is immersed with its combustion-space side into a liquid cushion, the displacement is measured and the volume of the combustion-space side is calculated from this.

5. Method according to one of the preceding claims, **characterized in that**, in the casting method, pistons with a cleft surface or with recesses and elevations located on the combustion-space side are produced.

6. Method according to one of the preceding claims, **characterized in that** a substantial part of a piston surface located on the combustion-space side remains as a rough casting surface.

## Revendications

1. Procédé de fabrication de pistons pour un moteur alternatif à combustion interne, notamment pour un moteur à allumage par étincelle avec injection directe, notamment d'un véhicule automobile, dans lequel chaque piston est fabriqué au cours d'un procédé de coulée et un volume de compression est défini dans un cylindre, **caractérisé en ce qu'**au moins un premier piston d'une charge d'une opération de coulée détermine le volume V_{IST} formé par sa surface du côté de la chambre de combustion, **en ce que** ce volume V_{IST} est comparé à un volume V_{SOLL} souhaité et qu'en fonction de cette comparaison, le niveau de compression K_{H} est établi en s'écartant d'une valeur de consigne, qu'ensuite un volume de compression prédéfini soit garanti à l'exception d'écarts dus aux tolérances.

2. Procédé selon la revendication 1, **caractérisé en ce qu'**après la coulée pour tous les pistons d'une charge, l'alésage de boulon du piston est réalisé à une distance prédéterminée K_{H} de la surface du piston.

3. Procédé selon la revendication 2, **caractérisé en ce que** pour la réalisation de l'alésage de boulon du piston, le piston est usiné mécaniquement, par exemple au moyen d'un fraisage.

4. Procédé selon l'une quelconque des revendications précédentes, **caractérisé en ce que** le volume est déterminé par le fait que le piston est plongé avec son côté chambre de combustion dans un coussin de liquide, le déplacement est mesuré et l'on en déduit le volume du côté de la chambre de combustion.

5. Procédé selon l'une quelconque des revendications précédentes, **caractérisé en ce que** pendant le procédé de coulée, on fabrique des pistons avec une surface crevassée ou avec des creux et des bossages du côté de la chambre de combustion.

6. Procédé selon l'une quelconque des revendications précédentes, **caractérisé en ce qu'**une partie essentiellement d'une surface de piston du côté de la chambre de combustion subsiste en tant que surface de coulée.
